# EUROPEAN PATENT APPLICATION

(11) **EP 1 324 012 A2**
(43) Date of publication of application: **02.07.2003**
(21) Application number: 02028855.1
(22) Date of filing: 23.12.2002
(51) Int. Cl.: G01J 5/02

(54) **Non-contact temperature sensor and detection circuit for the same**

(30) Priority: 27.12.2001 JP 2001397382
(71) Applicant: Ishizuka Electronics Corp., Tokyo 130-0013 (JP)
(72) Inventor: Nojiri, Toshiyuki, Tokyo 130-0013 (JP)
(74) Representative: Skuhra, Udo, Dipl.-Ing.

(57) **Abstract**

A non-contact temperature sensor includes a holder 10 having a cavity 12 with a light conducting portion 11 for conducting the infrared ray incident from an opening 10a at the one end and a closed-end cavity 13 with the one end closed which is arranged adjacently to the cavity 12; a resin film 20 arranged on the side of an opening 10b at the other end of the light conducting portion 11 of the holder 10 and an opening 10c of the closed end cavity 13; a space 50a formed behind the resin film 20; an infrared ray detecting heat-sensitive element 30a arranged on the resin film 20 located at the opening at the other end of the light conducting portion 11; a temperature compensating heat-sensitive element 30b arranged on the resin film 20 located at the opening 10c of the closed end cavity 13; and a cover member 50 for sealing the resin film 20 and forming the space 50a. In this configuration, the non-contact temperature sensor can accurately detect the infrared ray emitted from a detection object without being affected by a microwave.

## Description

### BACKGROUND OF THE INVENTION

### 1. Field of the Invention

This invention relates to a temperature sensor, and more particularly to a non-contact temperature sensor for detecting a surface temperature of food microwave-heated by a microwave oven in a non-contact manner and a detection circuit for the non-contact temperature sensor.

### 2. Description of the Related Art

Conventionally, a non-contact temperature sensor as disclosed in JP-A-11-223555 has been proposed. The non-contact sensor can detect the surface temperature of a detection object accurately in a short time.

The non-contact temperature sensor is a temperature sensor which detects the surface temperature of a rotating body such as a fusing fixing roller of a fusing device in a non-contact manner in order to fuse the non-fixed toner image on a sheet of paper.

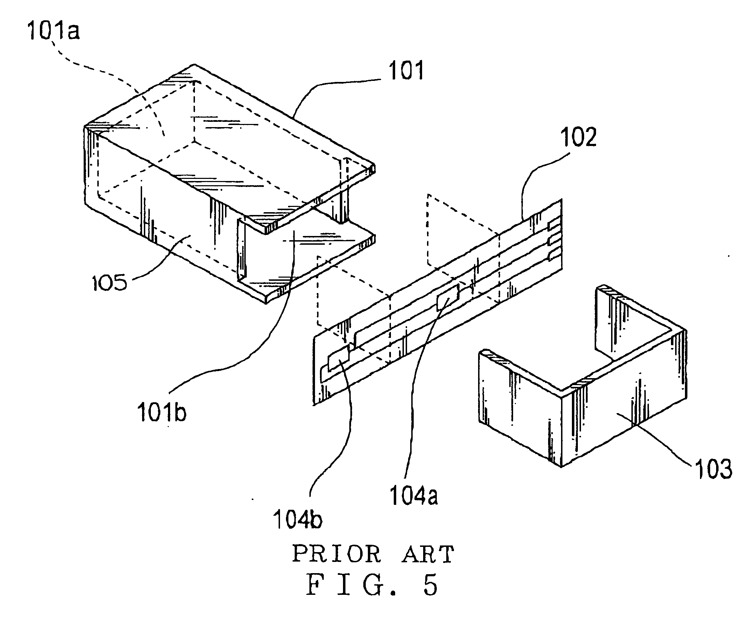

Fig. 5 is an exploded perspective view of a conventional non-contact temperature sensor.

As seen from the figure, the non-contact temperature sensor includes a holder 101 having a light conducting portion which is rectangular in the cross section, a resin film 102 equipped with heat-sensitive elements 104a and 104b and a cover member 103. The holder 101 includes an opening 101a at the one end on which infrared ray are incident, an interior communicating with the opening 101a which constitutes a light conducting portion 105 though which the infrared ray are passed, and another opening at the other end.

The light conducting portion 105 has an infrared ray absorbing film for absorbing the infrared ray. The opening 101b is covered with the resin film and closed by the cover member 103. On the rear surface of the resin film which is opposite to the surface on which the infrared ray are incident, an infrared ray detecting heat-sensitive element (DHE) 104a and a temperature compensating heat-sensitive element(CHE) 104b are provided, which may be thin-film thermistors. A space is formed between the resin film 102 and the cover member 103.

The infrared ray absorbing film of the light conducting porrion 105 serves to absorb the infrared ray emitted from a background portion other than the detection object so that the resin film 102 can absorb only the infrared ray from the detection object directly incident from the opening 101a.

In the conventional non-contact temperature sensor, the infrared ray emitted from the detection object are incident from the opening 101a of the non-contact temperature sensor, and passes through the light conducting portion 105 so that it is absorbed by the resin film 102. The absorbed infrared ray is converted into heat energy which increases the temperature of the resin film. By detecting the temperature increase using the DHE 104a which is in intimate contact with the resin film, the surface temperature of the detection object can be detected.

Fig. 6 is a circuit diagram of an output detection circuit of the non-contact temperature sensor as shown in Fig. 5. In this output circuit, a resistor R10 and an infrared ray detecting heat-sensitive element 104a are connected in series between a power source terminal V and ground. In addition, a resistor R20 and a temperature compensating heat-sensitive 104b are connected in series between the power source terminal V and ground. According to the connecting relationship between the resistors R10, R20 and the DHE 104a and the CHE 104b, the one ends of the infrared ray detecting heat-sensitive element 104a and the CHE 104b are commonly connected to ground. Further, the other ends of the resistor R10 and the DHE 104a are connected to each other and the other ends of the resistor R20 and the CHE 104b are connected to each other. Thus, a bridging circuit is formed.

The DHE 104a and the CHE 104b may be thin film thermistors having substantially the same temperature characteristic. The resistance of the DHE 104a is varied by the infrared ray from the detection object so that the potential at connecting point a is varied.

Simultaneously, owing to the heat radiated from the object body and the ambient temperature, the temperature of the holder 101 also increases. Therefore, the resistance of the CHE 104 increases by the degree corresponding to the increase in the temperature of the holder 101. Thus, the potential at connecting point b varies.

However, since the DHE 104a and CHE 104b have the same temperature characteristic, the potential at connecting point a depends on the temperature change due to the infrared ray from the detection object. Therefore, by the amplifying the potential difference between the connecting points a and b using an operational amplifier amp, an electric signal corresponding to the surface temperature of the object body can be produced from the output terminal 110 of the operational amplifier amp.

Meanwhile, a microwave oven serves to do heat-cooking by irradiating foods with a microwave. Such a microwave oven has been widely used for both home and business use. The microwave oven is required to detect the heat-finishing of the food accurately, and stop the heating automatically.

Conventionally, the heat-finishing by the microwave oven was detected through the surface temperature measuring method using an infrared ray sensor. General examples of the infrared sensor were a thermopile or pyroelectric sensor.

However, where these infrared sensors are loaded in the microwave oven, since the output signal is very small, an electronic circuit and structure will become complicate for amplification with enhanced S/N.

Since the interior of the microwave oven is placed at a comparatively high temperature, when the infrared sensor is installed in the microwave oven, temperature compensation must be done. However, for the temperature compensation of the infrared sensor, each infrared sensor must be equipped with a temperature sensor for temperature compensation. The infrared sensor must be individually adjusted. This is very troublesome and costly.

Further, a conventional thermopile type infrared sensor, which has a hot/cold contact arranged on the chip, is susceptible to an electromagnetic wave and hence is difficult to detect the temperature accurately.

In view of these problems, the inventor of this invention has investigated whether or not the non-contact temperature sensor disclosed in JP-A-11-223555 can be used as a temperature sensor for detecting the finishing of the food heated by the microwave oven. As a result, it has been found that the holder used in these conventional non-contact temperature sensor, which does not take the influence by the microwave into consideration, produces an induced current in the wiring pattern on the resin film or extended line, and hence the DHE and CHE are heated so that their resistance varies. As a result, the temperature cannot be detected accurately so that the food heat-cooked is heated excessively, otherwise the heating operation is stopped with the food being heated insufficiently.

### SUMMARY OF THE INVENTION

This invention has been accomplished in order to solve the problems as described above, and intends to provide a non-contact temperature sensor having a structure capable of accurately detecting the infrared ray emitted from a detection object without being affected by a microwave, and a detection circuit for the non-contact temperature sensor.

In order to attain the above object, in accordance with this invention, there is provided a non-contact temperature sensor comprising:
a holder having a cavity with a light conducting portion for conducting the infrared ray incident from a first opening at the one end and a closed-end cavity with the one end closed which is arranged adjacently to the cavity;
a resin film arranged on the side of a second opening at the other end of the light conducting portion of the holder and a third opening of the closed end cavity;
a space formed behind the resin film;
an infrared ray detecting heat-sensitive element (DHE) arranged on the resin film located at the opening at the other end of the light conducting portion;
a temperature compensating heat-sensitive element (CHE) arranged on the resin film located at the opening of the closed end cavity; and
a cover member for sealing the resin film and forming the space.

In this configuration, the cover member may be made of the same material as the holder; the two heat-sensitive elements as well as the resin film are hermetically sealed in the space; and an infrared ray reflecting film may be formed in the space, which reflects the heat emitted from the resin film, thereby further improving the detection sensitivity.

In the non-contact temperature sensor described above, preferably, the cavity and the closed-end cavity have substantially the same shape and are arranged in parallel.

In this configuration, since the cavity and the closed-end cavity have substantially the same shape and are arranged in parallel, when equal amounts of heat energy are applied to the DHE and the CHE, only the energy of the infrared ray incident from the light conducting portion can be detected accurately.

In the non-contact temperature sensor described above, preferably, the holder is made of a main component of one of 6-nylon, 66-nylon, PBT, PPS, ABS resin and liquid crystal polymer resin, and any one or combination of tungsten (W) powder, tin (Sn) powder, carbon powder, carbon fiber , aluminum (Al) powder, copper (Cu) powder, lead (Pb) powder or magnesium (Mg) , which is contained in the main component.

In this configuration, in order to absorb the infrared ray emitted from the background other than the detection object, unlike the conventional holder, the step of forming the infrared ray absorbing film in the light conducting portion is not required. Further, it is not necessary to manage the thickness of the infrared ray absorbing film so that the light conducting portion can be formed accurately. For each of the products of the non-contact temperature sensor, the incident angle of the infrared ray is constant, and the infrared ray can be detected accurately.

The non-contact temperature sensor described above, preferably further comprises a heat-insulating member having a fourth opening with a cross sectional area larger than the first opening of the holder, and arranged so as to form an air insulating layer between itself and the holder.

In this configuration, since the non-contact temperature sensor is located within the heat-insulating member through the air insulating layer, even when the cabinet of the heating chamber equipped with the heat-insulating member is heated by the microwave, the influence of heating and the heat radiated from the heat-insulating member are difficult to propagate to the non-contact temperature sensor.

In accordance with this invention, there is further provided a detection circuit for a non-contact temperature sensor using the non-contact temperature sensor described above, wherein a difference voltage between an output voltage which appears at a first connecting point of the DHE connected in series between a power source and ground and a first resistor, and another output voltage which appears at a second connecting point of the CHE connected in series between the power source and ground and a second resistor is processed to detect a surface temperature of a detection object.

In this configuration, since the portions of the wiring pattern for the series circuit composed of the DHE and the first resistor and another series circuit composed of the CHE and the second resistor are formed symmetrically, the noises superposed on the outputs on the sides of temperature compensation and infrared ray detection are in phase. Therefore, the differential amplifier circuit to which the output signals on the sides of temperature compensation and infrared ray detection can remove the influence from the same phase. Thus, even if the sensor output is small, it is amplified with the noise component removed, thereby improving the S/N ratio.

The above and other obj ects and feature of this invention will be more apparent from the following description taken in conjunction with the accompanying drawings,

### BRIEF DESCRIPTION OF THE DRAWINGS

Fig. 1 is an exploded perspective view showing an embodiment of the non-contact temperature sensor according to this invention;
Fig. 2 is a sectional view taken in line X - Y in the non-contact temperature sensor in Fig. 1;
Fig. 3 is a view showing the state where the non-contact temperature sensor shown in Fig. 1 is arranged within an electronic oven;
Fig. 4 is a circuit diagram of the detection circuit for a non-contact temperature sensor according to this invention;
Fig. 5 is an exploded perspective view showing an embodiment of a conventional non-contact temperature sensor; and
Fig. 6 is a circuit diagram of a conventional detection circuit for a non-contact temperature sensor.

### DESCRIPTION OF THE PREFERRED EMBODIMENTS

### Embodiment 1

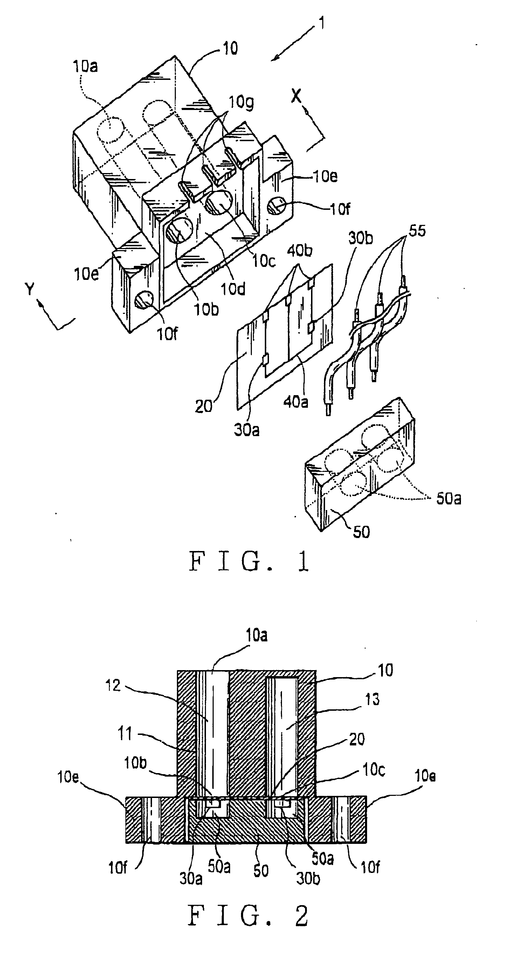

Now referring to the drawings, an explanation will be given of an embodiment of a non-contact temperature sensor according to this invention. Fig. 1 is an exploded perspective view of the non-contact temperature sensor according to this invention. Fig. 2 is a sectional view taken in line X - Y in the non-contact temperature sensor shown in Fig. 1.

In Figs. 1 and 2, a non-contact temperature sensor 1 includes a holder 101, a resin film 20 and a cover member 50 for fixing the resin film 20. The holder 101 includes an opening 10a at the one end which are round in the section and on which infrared ray are incident, a cavity 12 which communicates with the opening 10a and constitutes a light conducting portion and another opening 10b at the other end, and a closed-end cavity 13 adjacent to the cavity 12 having an opening 10c at one end and substantially the same shape as that of the cavity 12. The resin film 20 is arranged on the side of openings 10b and 10c of the holder 10.

The holder 10 is provided with attaching ears 10e having attaching holes 10f for holding the non-contact temperature sensor 1. A wiring pattern 40a is formed on the surface of the resin film 20. The wiring pattern 40a has a DHE 30a and CHE 30b which are formed at the positions corresponding to the openings 10b and 10c. The DHE 30a and CHE 30b are connected to the lands (not shown) on the wiring pattern 40a.

Extending lines 55 are electrically connected to attaching terminals 40b. The resin film 20 is secured by the cover member 50 and fit in a concave portion 10d of the holder 10. The cover member 50 has a space 50a at positions in contact with the DHE 30a and CHE 30b on the resin film 20.

The extending lines 55 connected to the attaching terminals 40b are extended out in such a fashion that they are fit in lengthy holes 10g recessed longitudinally on the upper face of the concave portion 10d.

The holder 10 is made of the resin capable of absorbing infrared ray and containing conductive powder. In this embodiment, the holder 10 is formed by molding a mixture of 6-nylon resin and carbon powder or carbon fiber containing at 70 wt % through known injection molding technique. In other examples, any of PBT, PPS, ABS, 6-nylon, 66-nylon resin and liquid crystal polymer, etc. may be mixed with tungsten (W) powder, tin (Sn) powder, carbon powder, carbon fiber , aluminum (Al) powder, copper (Cu) powder, lead (Pb) powder or magnesium (Mg) powder.

Since the infrared ray emitted from the background except the detection object is absorbed by the holder having the structure described above, in this embodiment, a step of forming an infrared ray absorbing film unlike the conventional holder is not required. Therefore, since it is not necessary to manage the thickness of the deposited infrared ray absorbing film, the light conducting portion with high dimension accuracy can be formed. Thus, a variation in the incident angle of the infrared ray for various products disappears. Accordingly, the non-contact temperature sensor with excellent accuracy of detecting the infrared ray can be manufactured.

Further, by setting the diameter of the opening 10a at 8 mm or less, the non-contact temperature sensor is designed so that the wiring pattern 40a, DHE 30a and CHE 30b are not influenced by the microwave.

Further, since the holder 10 and the cover member 50 are also caused to contain the conductive powder, the wiring pattern 40a is shielded by the holder 10 and the cover member 50. For this reason, an induced current due to invasion of the microwave is prevented from being generated so that poor temperature detection by heating the DHE 30a and CHE 30b can be prevented.

The two cavities 12 and 13 have substantially the same shape and are arranged in parallel within the holder 10. The incident infrared ray passes through the light conducting portion and absorbed by the resin film 20, and also absorbed by the outer surface of the holder 10. Since the cavity 12 and closed-end cavity 13 are arranged in parallel, equal amounts of heat energy is applied to the DHE 30a and CHE 30b through the holder 10. Thus, only the infrared ray energy incident through the light conducting portion can be detected accurately.

The resin film 20 is arranged to cover the openings 10b and 10c made in the holder 10. The infrared ray is incident from the openings 10a, and absorbed by the resin film 20 at the area corresponding to the opening 10a. The resin film 20 may be made of resin of the high polymer material inclusive of fluorine plastic, silicon, polyester, polyimide, polyethylene, polycarbonate, PP5 (polyphenylene sulfide), etc., may be any other material as long as it can absorb the infrared ray.

These resins may be made of the material in which carbon black or inorganic pigment (at least one of chrome yellow, colcothar, titanium white and ultramarine) is dispersed to enable the infrared ray over a substantially entire wavelength to be absorbed.

The wiring pattern 40a formed on the resin film 20 has terminals 40b for attaching extended lines. Since the portions of the wiring pattern 40a connected to the DHE 30a and CHE 30b are formed symmetrically to each other, the influence of the noise to be superposed on an output signal can be removed in a differential amplifier described later.

Further, in order assure the electric insulation between the wiring pattern 40a and the cover member 50, the wiring pattern 40a may be equipped with an insulating film, otherwise the insulating film may be formed on the side of the cover member 50.

The DHE 30a and CHE 30b are bonded to the lands (not shown) of the wiring pattern 40a on the one surface of the resin film 20. The DHE 30a and CHE 30b may be heat-sensitive elements having substantially the same temperature characteristic. The DHE 30a is arranged centrally on the opening 10b of the holder 10 and the CHE 30b is arranged centrally on the opening 10c of the holder 10.

The DHE 30a and CHE 30b are thin-film thermistors each having a size of 1.0 x 0.5 mm.

The thin-film thermistor can be formed by sputtering a mixed material of a metal oxide of manganese, nickel, cobalt, copper, etc. on an insulating substrate of e.g. alumina, sputtering electrodes and cutting the insulating substrate in a desired size.

The DHE 30a and CHE 30b should not be limited to the thin-film thermistors employed in this embodiment, but may be chip thermistors or other semiconductor temperature sensors.

The cover member 50 is made of the same material as the holder 10. The two heat-sensitive elements as well as the resin film 20 are hermetically sealed in the space. Provision of the infrared ray reflecting film in the space 50, which reflects the heat emitted from the resin film 20, can further improve the detection sensitivity.

In this embodiment, although the DHE 30a and the CHE 30b are placed on the resin film 20 on the side of the space 50a, they may be placed on the aide of the cavities 12 and 13.

In this embodiment, although the spaces 50a are individually formed for the DHE 30a and CHE 30b, a single integral space may be placed for them.

An explanation will be given of the process for assembling the non-contact temperature sensor 1 described above.

First, conductive adhesive is applied to the lands of the wiring pattern 40a by screen printing.

The DHE 30a and the CHE 30b are placed on the lands and electrically bonded to the lands in an atmosphere of 150 °C - 180 °C.

Otherwise, conductive adhesive is applied on the electrode portions of the DHE 30a and CHE 30b using a dispenser. The DHE 30a and the CHE 30b are placed on the lands and electrically bonded to the lands in an atmosphere of 150 °C - 180 °C.

Extended lines 55 are electrically connected to the attaching terminals 40b by soldering or welding. The resin film 20 is bonded to the holder 10 in such a way that the surface of the resin film 20 on which the DHE 30a and CHE 30b are not placed is located on the side of the openings 10b and 10c of the holder 10. In this case, the extended lines 55 are fit in the long holes 10g recessed in the upper surface of the concave portion 10d.

Next, the cover member 50 is fit in the concave portion 10d of the holder 10. The gap between the concave portion 10d and the cover member 50 is filled with adhesive such as epoxy resin to complete the non-contact temperature sensor 1.

In this embodiment, although the cover member 50 is secured to the holder 10 using the adhesive, the cover member 50 may be secured to the concave portion 10 by bolting.

### Embodiment 2

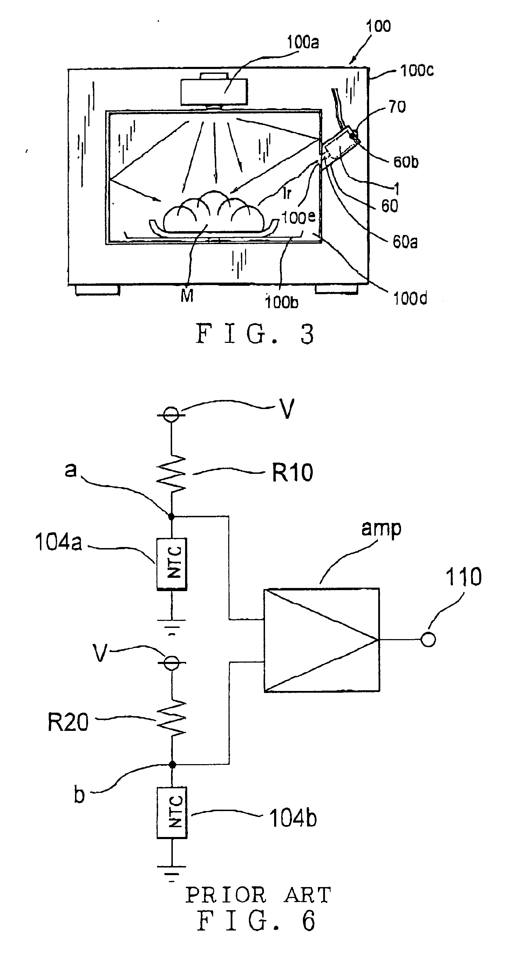

Referring to Fig. 3, an explanation will be given of an application of the non-contact temperature sensor 1 to a microwave oven.

The non-contact temperature sensor 1 is sealed in a heat-insulating member 60 arranged between an exterior cabinet 100c of an electronic oven 100 and a heating chamber 100d. The non-contact temperature sensor 1 is bolted to the inner wall of the heat-insulating member 60 so that the opening 10a is coincident with the opening 100e made in the wall of the heating chamber 100d and the heat-insulating member 60a in their positions.

The heat-insulating member 60 may be made of the resin such as PPS, PBT, ABS, etc. The heat-insulating member 60 is formed so as to cover the non-contact temperature sensor and has an opening 60a having a larger area than the opening 10a of the non-contact temperature sensor 1. The heat-insulating member 60 has holes 60b corresponding to the attaching holes of the non-contact temperature sensor 1.

The attaching holes 10f of the non-contact temperature sensor 1 and the holes 60b of the heat-insulating member 60 are threaded by screws 70. As a result, the infrared ray Ir, which is radiated from an detection object M on a turn table 100b which is irradiated with the microwave emitted from a magnetron 100a and heated, is conducted from the opening 60 to the light conducting portion 11 through the opening 10a of the non-contact temperature sensor 1.

Since the non-contact temperature sensor 1 is secured in the heat-insulating member 60 through an air insulating layer by a screw 70, even when the cabinet 100c defining the heating chamber 100d is heated by the microwave, the heat is difficult to propagate to the non-contact temperature sensor 1 and the radiated heat from the heat-insulating member 60 is also difficult to propagate to the non-contact temperature sensor.

### Embodiment 3

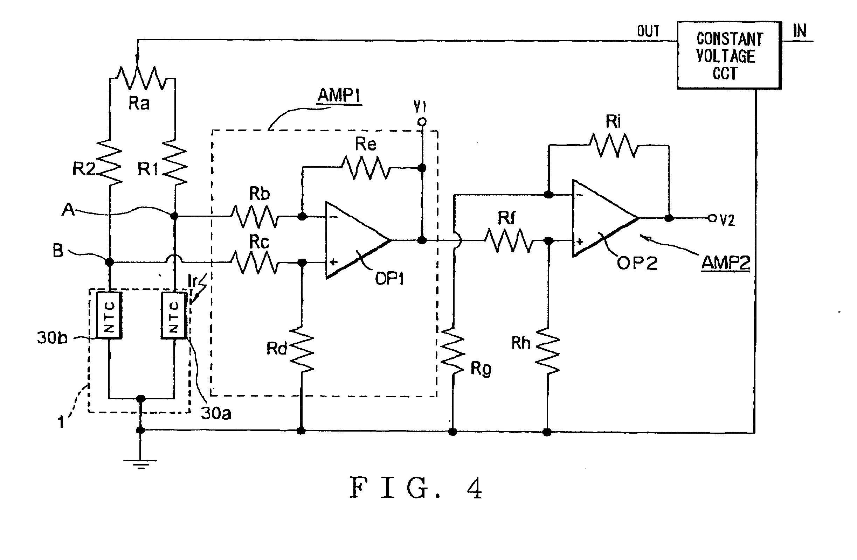

Now referring to Fig. 4, an explanation will be given of a detection circuit in which the non-contact temperature sensor 1 is connected.

The one ends of the DHE 30a and CHE 30b which constitute the non-contact temperature sensor 1 are connected to the one ends of resistors R1 and R2. The other ends of the resistors R1 and R2 are connected to the terminals of a potentiometer Ra whose sliding terminal is connected to the output terminal of a constant voltage circuit.

The other ends of the DHE 30a and CHE 30b are commonly connected to ground. The connecting point A of the resistor R1 and the DHE 30a is connected to an inverting input terminal of an operational amplifier OP1 through an input resistor Rb. The connecting point B of the resistor R2 and the CHE 30b is connected to a non-inverting input terminal of the operational amplifier OP1 through an input resistor Rc.

A feedback resistor Re is connected between the inverting input terminal and the output terminal of the operational amplifier OP1, and a resistor Rd is connected between the non-inverting input terminal of the operational amplifier OP1 and ground. The operational amplifier OP1 and these resistors Rb-Re constitute a differential amplifier circuit AMP1.

The non-contact temperature sensor 1 generally keeps zero the potential which is generated between the connecting points A and B by adjusting the resistance of the potentiometer Ra. Therefore, when the non-contact temperature sensor 1 does not sense the heat generated from the detection object M, the input voltage to the differential amplifier circuit AMP1 is zero.

The output from the differential amplifying circuit AMP1 is produced at an output terminal V1 and also supplied to the non-inverting input terminal of an operational amplifier OP2 through a resistor Rf. The inverting input terminal of the operational amplifier OP2 is connected to ground through a resistor Rg, and connected to the output terminal through a feedback resistor Ri. The non-inverting input terminal is connected to ground through a resistor Rh. The operational amplifier OP2 and the resistors Rh to Rg and Rf constitute a non-inverting amplifying circuit AMP2.

In operation of the non-contact temperature sensor 1, the infrared ray Ir emitted from the surface of the detection object M passes through the opening 100e formed on the wall of the heating chamber 100d, and is incident from the opening 10a of the non-contact temperature sensor 1. The infrared ray Ir passes through the light conducting portion 11 to reach the resin film 20. The infrared ray is absorbed by the resin film 20 so that it is converted into heat energy.

The converted heat is transmitted to the DHE 30a so that the temperature of the DHE 30a increases. The DHE 30a and the CHE 30b are thin-film thermistors each having substantially the same temperature characteristic. When the resistance of the DHE 30a is varied by the infrared ray Ir from the detection object M, the potential at the connecting point A is varied from zero to a prescribed level.

Simultaneously, since the temperature of the holder 10 also increases owing to the heat radiated from the detection object M and the ambient temperature, the resistance for the CHE 30b also varies according to an increase in the temperature of the holder 10. However, since the cavity 12 and closed-end cavity 13 for the have substantially the same shape, both DHE 30a and CHE 30b vary in the same fashion for a temperature change in the atmosphere. Therefore, the temperature change in the atmosphere cen be disregarded. Thus, only the temperature change owing to the infrared ray Ir from the detection object M can be detected.

The voltage difference between the connecting points A and B due to the temperature change is amplified by the differential amplifier circuit AMP and further amplified by the non-inverting amplifier circuit AMP2 at the next stage so that it is produced as an output.

Since the portions of the wiring pattern 40a are formed symmetrically, the noises superposed on the outputs on the sides of temperature compensation and infrared ray detection are in phase. Therefore, the differential amplifier circuit AMP1 to which the output signals on the sides of temperature compensation and infrared ray detection can remove the influence from the same phase. Thus, even if the sensor output is small, it is amplified with the noise component removed, thereby improving the S/N ratio. The output from the differential amplifier circuit AMP1 is amplified by the non-inverting amplifier circuit AMP2 at the next stage. The amplified output is produced in a voltage level corresponding to the surface temperature of the detection object M from the output terminal V2.

Incidentally, although this invention has been applied to the electronic oven in the embodiment described above, this invention can be applied to a fixing device of a copy machine, or other devices for measuring the surface temperature in a non-contact manner.

In accordance with this invention, by forming the holder of the resin containing powder having conductivity, the holder itself can absorb the infrared ray so that the holder is not required to have an infrared ray absorbing film unlike the prior art. Therefore, the steps of forming the infrared ray absorbing film and managing the film thickness are not required. Thus, the manufacturing process can be simplified and the opening and light conducting portion can be formed accurately.

As described above, since the opening and light conducting portion can be formed accurately, for each of the products of the non-contact temperature sensor, the incident angle of the infrared ray is constant, and hence the infrared ray can be detected accurately

Since the cavity having the light conducting portion and the closed-end cavity in the holder are formed so as to have the same shape, they have equal thermal capacities. Therefore, the DHE and CHE receive equal amounts of heat energy from the outer surface of the holder. Thus, only the infrared ray which passes through the light conducting portion from the detection object can be detected accurately, thereby improving the accuracy of temperature measurement.

## Claims

1. A non-contact temperature sensor comprising:
a holder having a cavity with a light conducting portion for conducting the infrared ray incident from a first opening at the one end and a closed-end cavity with the one end closed which is arranged adjacently to the cavity;
a resin film arranged on the side of a second opening at the other end of the light conducting portion of the holder and a third opening of the cloaed-end cavity;
a space formed behind the resin film;
an infrared ray detecting heat-sensitive element(DHE) arranged on the resin film located at the opening at the other end of the light conducting portion;
a temperature compensating heat-sensitive element (CHE) arranged on the resin film located at the opening of the closed end cavity; and
a cover member for sealing the resin film and forming the space.

2. A non-contact temperature sensor according to claim 1, wherein said cavity and said closed-end cavity have substantially the same shape and are arranged in parallel.

3. A non-contact temperature sensor according to claim 1, wherein said holder is made of a main component of one of 6-nylon, 66-nylon, PBT, PPS, ABS resin and liquid crystal polymer resin, and tungsten (W) powder, tin (Sn) powder, carbon powder, carbon fiber, aluminum (Al) powder, copper (Cu) powder, lead (Pb) powder or magnesium (Mg) or any combination thereof, which is contained in the main component.

4. A non-contact temperature sensor according to claim 1, further comprising a heat-insulating member having a fourth opening with a cross sectional area larger than the first opening of said holder, and arranged so as to form an air insulating layer between itself and said holder.

5. A detection circuit for a non-contact temperature sensor using the non-contact temperature sensor defined in claim 1, wherein a difference voltage between an output voltage which appears at a first connecting point of the infrared ray detecting heat-sensitive element connected in series between a power source and ground and a first resistor, and another output voltage which appears at a connecting point of said temperature compensating heat-sensitive element connected in series between the power source and ground and a second resistor is processed to detect a surface temperature of a detection object.
